(19) Europäisches Patentamt
European Patent Office
Office européen des brevets

(11) **EP 4 760 591 A1**

(12) **EUROPEAN PATENT APPLICATION**

(43) Date of publication:
**17.06.2026 Bulletin 2026/25**

(21) Application number: **24383349.8**

(22) Date of filing: **10.12.2024**

(51) International Patent Classification (IPC):
**G06N 3/042** (2023.01)    **G06N 3/047** (2023.01)
**G06N 3/0475** (2023.01)   **G06N 3/088** (2023.01)
**G06N 10/60** (2022.01)

(52) Cooperative Patent Classification (CPC):
**G06N 3/042; G06N 3/047; G06N 3/0475;
G06N 3/088;** G06N 10/60

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Bundesdruckerei GmbH**
  **10969 Berlin (DE)**
• **Multiverse Computing S.L.**
  **20014 Donostia / San Sebastián (ES)**

(72) Inventors:
• **RADONS, Manuel**
  **Berlin (DE)**
• **ABEDI, Ali**
  **Berlin (DE)**

• **MENTER, Josef**
  **Berlin (DE)**
• **RODRIGUEZ, Alejandro Moreno**
  **Donostia San Sebastián (ES)**
• **FENTAW, Desale**
  **Donostia San Sebastián (ES)**
• **DIXIT, Ninad**
  **Toronto (CA)**
• **PALMER, Samuel Douglas**
  **Toronto (CA)**
• **SALLES DE PADUA, Raul**
  **Donostia San Sebastián (ES)**

(74) Representative: **Steffens, Adrian et al
Boehmert & Boehmert
Anwaltspartnerschaft mbB
Pettenkoferstraße 22
80336 München (DE)**

(54)     **METHOD FOR GENERATING SYNTHETIC DATA**

(57)     The present disclosure pertains to a computer-implemented method for generating synthetic data. The method comprises: providing a tensor network including a plurality of tensors and a training dataset including at least one training data string; training the tensor network with respect to the training dataset by gradient descent, comprising the following steps: determining a tensor network gradient from the tensor network, the tensor network gradient being evaluated using the training dataset; applying noise to the tensor network gradient; and adjusting the tensor network based on the tensor network gradient. The method further comprises generating, from the tensor network, synthetic data including a synthetic data string. Each component to be sampled of the synthetic data string is generated according to a sample probability which is a marginal probability for the component or a conditional probability conditioned on at least one value of a further component of the synthetic data string; and at least one of determining the marginal probability and determining the conditional probability comprises separating, for the component, a corresponding partial tensor network from the tensor network and determining a squared norm of the corresponding partial tensor network. Further, a data processing system, a computer program product, and a computer-readable medium are disclosed. (Fig. 2)

Fig. 2

**Description**

The present disclosure refers to a method for generating synthetic data, a system for generating synthetic data, a corresponding computer program product, and a computer-readable medium.

Background

Synthetic data generation has emerged as a crucial endeavor in the realm of artificial intelligence, addressing the challenges posed by data scarcity and the need for diverse datasets in training machine learning models. One of the main challenges in leveraging synthetic data is ensuring that it accurately captures the underlying patterns and distributions of real-world data. An overview of synthetic data generation in the context of machine learning is provided in Lu et al., Journal of LaTeX files, Vol. 14, No. 8, 2021. An introduction to machine learning can for example be found in A. Jung, Machine Learning: The Basics, Springer, Singapore, 2022.

In many industries, the use of real data is restricted due to privacy concerns, which limits the ability to perform comprehensive data analysis and machine learning model training. While synthetic data offers numerous benefits, including scalability, accessibility, and versatility, its use also raises significant concerns regarding privacy risks. Unlike real-world data, synthetic data are not derived from actual observations but are instead generated by algorithms trained on existing data. As a result, synthetic data may inadvertently disclose sensitive information about individuals or entities present in the original data, posing potential threats to privacy and confidentiality. An overview of differential privacy in view of machine learning is available in Abadi et al., Deep Learning with Differential Privacy, 23rd ACM Conference on Computer and Communications Security, 2016.

Known synthetic data generation approaches make use of, e.g., CTGAN (Conditional Tabular Generative Adversarial Network), Gaussian copulas, Bayesian Networks (BN-Co), and Bayesian Network Identities (BN-Id). However, traditional methods either compromise privacy or result in synthetic data with comparatively low utility.

Summary

It is an object of the present disclosure to provide a method for generating synthetic data that preserve privacy while still being representative of the original data.

For solving the problem, a computer-implemented method for generating synthetic data is provided according to independent claim 1. Moreover, a system for generating synthetic data, a computer program product, and a computer-readable medium are provided. Further embodiments are disclosed in dependent claims.

The method according to the invention addresses the above issues by making use of tensor networks to generate synthetic data with built-in differential privacy mechanisms. The method may allow for the generated data to protect individual privacy without sacrificing performance on key utility metrics, enabling broader and safer use of synthetic data across various applications.

According to an aspect of the invention, the method for generating synthetic data comprises:

- providing a tensor network including a plurality of tensors and a training dataset including at least one training data string;
- training the tensor network with respect to the training dataset by gradient descent, comprising the following steps:

  - determining a tensor network gradient from the tensor network, the tensor network gradient being evaluated using the training dataset;
  - applying noise to the tensor network gradient; and
  - adjusting the tensor network based on the tensor network gradient;

- generating, from the tensor network, synthetic data including a synthetic data string, wherein:

  - each component to be sampled of the synthetic data string is generated according to a sample probability which is a marginal probability for the component or a conditional probability conditioned on at least one value of a further component of the synthetic data string and
  - at least one of determining the marginal probability and determining the conditional probability comprises separating, for the component, a corresponding partial tensor network from the tensor network and determining a squared norm of the corresponding partial tensor network.

Further, a data processing system comprising means for carrying out the method is provided. In addition, a computer program product is provided that comprises instructions which, when the program is executed by a computer, cause the computer to carry out the method. Moreover, a computer-readable medium is provided that comprises instructions which, when executed by a computer, cause the computer to carry out the method.

The tensor network may, e.g., be an MPS (matrix product state) tensor network, a tensor train, an MPO (matrix product operator) tensor network, a tree tensor (TT) network, or a MERA (multi-scale entanglement renormalization ansatz) tensor network (cf. Vidal, arXiv:cond-mat/0512165). The tensor network may be a chain-like tensor network, such as MPS, TT, or MPO (cf. Schollwoeck, arXiv:1008.3477).

In case of a MPS tensor network, the tensor network may have a left-canonical form (left-normalized), a right-canonical form (right-normalized), or a mixed-canonical form.

The tensor network may comprise at least one tensor with tensor rank (tensor order) of at least 3. In particular, the tensor network may comprise at least two, five, or ten tensors with tensor rank (tensor order) of at least 3. The tensor network may comprise at least two, five, or ten tensors with tensor rank (tensor order) of at least 4.

The training dataset may comprise a binary-valued training data string and/or an integer-valued training data string.

A dataset in the sense of the present application (in particular, the training dataset) may refer to a structured collection of data points that usually relate to a specific topic and/or have been collected or measured for a specific purpose. The dataset may in particular be related to and/or be indicative of a predefined set of attributes, wherein individual datapoints each contain values for at least a subset of the attributes of the dataset. The values can be measured values, numbers, text data, and/or other values that describe the respective datapoint.

The training dataset can be partitioned into batches for training and/or into mini-batches for each gradient descent step.

The synthetic data may be an artificial dataset generated based on the training dataset, generated using the method with the aim of reflecting statistical properties of the training data set.

The method may further comprise preprocessing the training data set, the preprocessing including at least one of:

- discretizing a continuous data string to a discretized data string,
- mapping a discretized data string to a binary-valued or integer-valued training data string, and
- mapping a categorical data string to a binary-valued or integer-valued training data string.

As a result, the training data strings may be both indicative of original attributes and usable for the method.

Discretizing the continuous data string may comprise binning the continuous data string. Data bins for the binning may each have the same length. Alternatively, the data bins may have varying lengths, e.g., adjusted lengths based on the structure of the continuous data. The mapping may be carried out according to a one-to-one map. Mapping to a binary-valued string may comprise one-hot encoding.

The method may further comprise mapping the synthetic data string (binary-valued or integer-valued) to a discretized, continuous, or categorical synthetic data string.

The at least one training data string and/or a component thereof and/or a plurality of training data strings may be indicative of at least one of physiological data, medical data, ethnicity, social data, personal movement data, and address data. The physiological data may comprise height and/or weight. The social data may comprise, e.g., family relationships. The personal movement data may comprise GPS data.

The method may comprise using the generated synthetic data for a statistical analysis, in particular based on at least one of physiological data, medical data, ethnicity, social data, personal movement data, and address data. The method may also comprise image reconstruction and/or image denoising based on the synthetic data. The method may comprise assessing the synthetic data using at least one metric, e.g., a fidelity metric or a quality metric, in particular an F1 score.

The tensor network may be adjusted as a result of maximum likelihood estimation with respect to the training dataset. To this end, the tensor network gradient may be determined from a negative log-likelihood function of a norm of the tensor network, in particular a (normalized) squared norm of the tensor network.

For example, the negative log-likelihood function may be $\mathcal{L} = -\frac{1}{|T|}\sum_{v \in T} \ln P(v)$, with $P(v) = |\Psi(v)|^2/Z$, $\Psi(v)$ being a tensor network wave function, and $Z$ being a normalization factor.

The tensor network gradient may be represented by

$$\frac{\partial \mathcal{L}}{\partial A^{(k,k+1)\, w_k w_{k+1}}_{i_{k-1} i_{k+1}}} = \frac{Z'}{Z} - \frac{2}{|T|}\sum_{v \in T}\frac{\Psi'(v)}{\Psi(v)},$$

with $\Psi(v) = \mathrm{Tr}(A^{(1)v1}A^{(2)v2}...A^{(2)vN})$, derivative $\Psi'(v)$, normalization factor Z, derivative normalization factor Z', and training set size ITI.

The steps for training the tensor network may be repeated. In other words, the method may comprise training the tensor network with respect to the training dataset by gradient descent, comprising repeating the steps as defined in claim 1. The steps for training the tensor network may be repeated until a convergence criterion (for example, a gradient norm being below a predefined threshold) is met.

Alternatively, the steps for training the tensor network may be repeated for a predetermined number of times. For example, a number of gradient descent steps may be smaller than a number of employed batches. By minimizing the number of gradient descent steps, the amount of required noise may be reduced, thus more preserving data utility while maintaining strong privacy guarantees.

The tensor network may be trained by stochastic gradient descent. Preferably, the training may comprise determining mini-batch gradients (or batch gradients) from the tensor network, the mini-batch gradients (or the batch gradients) being evaluated using multiple samples from the training dataset, and determining the tensor network gradient as an average of the mini-batch gradients (or the batch gradients). For each (stochastic) gradient descent step, the training dataset may be split into corresponding mini-batches. A mini-batch may correspond to a subset of a batch.

Applying noise to the tensor network gradient may comprise entrywise adding random noise to the tensor network gradient.

The noise may be applied to the tensor network gradient for each (stochastic) gradient step (iteration). Alternatively, the noise may be applied to the tensor network gradient for at least one (stochastic) gradient step.

The random noise may include at least one of Gaussian noise and Laplacian noise. In particular, the random noise may include both Gaussian noise and Laplacian noise. For example, both Laplacian noise and Gaussian noise may be added to the tensor network gradient(s).

A noise parameter of the random noise may be determined from a differential privacy parameter or two differential privacy parameters. The differential privacy parameter(s) may be predetermined, e.g., based on a desired degree of privacy protection. The differential privacy parameter(s) may be determined based on an equation of moment for differential privacy. In general, the noise parameter may be determined from at least one of a differential privacy parameter, a model sensitivity value, a sampling ratio per lot, and a number of training iterations.

The noise parameter $\sigma$ may for example be a standard deviation (for Gaussian noise) or scaling parameter (Laplacian noise). The standard deviation $\sigma$ may, e.g., be determined as

$$\sigma = c \cdot q \cdot \frac{\sqrt{t \log 1/\delta}}{\epsilon},$$

with differential privacy parameters $\varepsilon$ and $\delta$, model sensitivity value c, sampling ratio per lot q, and number of training iterations t. On the other hand, the scaling parameter $\sigma$ may be determined as

$$\sigma = \frac{\Delta f}{\epsilon}$$

with differential privacy parameter $\varepsilon$ and model sensitivity value $\Delta f$.

In general, the noise parameter may be determined such that a predetermined degree of differential privacy for the synthetic data is achieved.

The training of the tensor network may further comprise constraining a tensor network gradient norm (a norm of the tensor network gradient) below a predefined threshold (clipping). For example, in case the tensor network gradient norm is above the predefined threshold, the tensor network gradient may be renormalized such that the tensor network gradient norm is equal to the predefined threshold.

The synthetic data string may comprise at least one predetermined component (i.e., a component not to be sampled). For example, at least one component of the synthetic data string may be known and/or fixed. The at least one predetermined component may be at the beginning and/or at the end and/or in the middle of the synthetic data string.

The training dataset may include a plurality of training data strings. The training data string or each of the training data strings may comprise a plurality of (training data string) components (elements). The synthetic data (synthetic dataset) may include a plurality of synthetic data strings. The synthetic data string or each of the synthetic data strings may comprise a plurality of (synthetic data string) components (elements). The training data string(s) and/or synthetic data string(s) may be a vector (vectors), preferably (each) comprising a plurality of vector components.

The tensor network gradient may be evaluated at the training data string, at a plurality of training data strings, or from a (sampled) subset of the training dataset.

Each tensor of the tensor network may correspond to a component (element) of the synthetic data string and/or a component (element) of at least one or each of the training data strings. Adjusting the tensor network may comprise adjusting the tensor network parameters.

The conditional probability (according to which a component to be sampled is generated) can be a quotient of two marginal probabilities (for components of the synthetic data string). In particular, the conditional probability (here: $P(v_{k-1}|v_k, ...)$) can be a marginal probability ($P(v_{k-1}, v_k, ...)$) for the component (i.e., $k$ - 1) and at least the further component (i.e., $k$) divided by a marginal probability ($P(v_k, ...)$) for at least the further component ($k$). The conditional probability and/or the marginal probabilities may or may not be normalized. In the latter case, the method may comprise normalizing the conditional probability and/or the marginal probabilities.

The marginal probability ($P(v_{k-1}, v_k, ...)$) for the component ($k$ - 1) and at least the further component ($k$) may be determined by separating (determining), for the component ($k$ - 1), a corresponding partial tensor network from the tensor network and determining a squared norm $|x^{vk-1,vk, ...}|^2$ of the corresponding partial tensor network. The corresponding partial tensor network may comprise (at least) a tensor (i.e., $A^{(k-1)}$) corresponding to the component ($k$ - 1) and a further tensor ($A^{(k)}$) corresponding to the component ($k$).

The marginal probability ($P(v_k, ...)$) for at least the further component (here: k) may also be determined by separating, for the component ($/c$), a corresponding (further) partial tensor network from the tensor network and determining a (further) squared norm $|x^{vk, ...}|^2$ of the corresponding (further) partial tensor network. The corresponding partial tensor network may comprise (at least) the further tensor ($A^{(k)}$) corresponding to the component ($k$). In case of further components $k, ..., N$, the (further) squared norm corresponds to:

$$|\boldsymbol{x}^{v_k,v_{k+1},...,v_N}|^2 = \quad .$$

Determining the marginal probability and/or determining the conditional probability may comprise normalizing the squared norm and/or the further squared norm. In particular, determining the marginal probability and/or determining the conditional probability may comprise dividing the squared norm and/or the further squared norm by normalization factor (Z). The normalization factor may be determined by contracting the tensor network: $Z = \sum_{V_N \in \{0,1\}} |x^{v_n}|^2$ .

In case the sample probability (itself) is a marginal probability ($P(v_N)$) for the component (N), the marginal probability may also be determined as a sum over remaining component indices ($v_1$, $v_2$, .. $v_{N-1}$), i.e., $P(v_N) = \sum_{v1, v2, .. vN-1} P(v)$. Equivalently, the marginal probability may be determined using a (normalized) squared norm $|x^{vN}|^2/Z$ of the corresponding partial tensor network.

In an example, a computer-implemented method for generating synthetic data may be provided, comprising at least one of: providing a tensor network, preferably including a plurality of tensors, and a training dataset, preferably including at least one training data string; training the tensor network with respect to the training dataset by gradient descent. The training may preferably comprise at least one of the following steps: determining a (tensor network) gradient from the tensor network, the (tensor network) gradient being evaluated using the training dataset; applying noise to the (tensor network) gradient; and adjusting the tensor network based on the (tensor network) gradient. In addition or alternatively, the method may further comprise generating, from the tensor network, synthetic data, preferably including a synthetic data string. In addition or alternatively, each component - which is to be sampled - of the synthetic data string may be generated according to a (sample) probability which preferably is a marginal probability (for the component) or a conditional probability conditioned on at least one value of a further component of the synthetic data string. In addition or alternatively, at least one of determining the marginal probability and determining the conditional probability may comprise separating and/or determining, for the component, a corresponding partial tensor network from the tensor network and/or determining a squared norm of the corresponding partial tensor network.

In addition or alternatively, the generating of the synthetic data comprises, for each component to be sampled of the synthetic data string, successively contracting the tensor network up to a tensor associated with the synthetic datapoint.

Providing the tensor network may be carried out in a provision module or provision unit. Training the tensor network may be carried out in a training module or training unit. Determining the tensor network gradient may be carried out in a gradient submodule or gradient subunit. Applying noise may be carried out in a noise submodule or noise subunit. Adjusting the tensor network based on the tensor network gradient may be carried out in an updating submodule or updating subunit. Generating the synthetic data may be carried out in a data generation module or data generation unit.

At least one of the data processing system, the computer program, and the computer-readable medium may comprise the provision module, the training module, and the data generation module. At least one of the data processing system, the computer program, and the computer-readable medium may comprise the provision unit, the training unit, and the data generation unit. Each module or unit may be provided in a separate data processing device or in a shared data processing device. Each module or unit may also be distributed over a plurality of data processing devices (separately or shared). The training module (unit) may comprise the gradient submodule (subunit), the noise submodule (subunit), and the updating submodule (subunit). Each (sub-)module or (sub-)unit may comprise an input/output interface for data communication with the other (sub-)modules or (sub-)units.

The embodiments described above in connection with the method for generating synthetic data may be provided correspondingly for at least one of the data processing system, the computer program product, and the computer-readable medium.

## Brief description of drawings

In the following, embodiments, by way of example, are described with reference to drawings in which:

Fig. 1 shows graphical representations for illustrating tensors and tensor operations;
Fig. 2 shows an overview flowchart of the method for generating synthetic data according to the invention;
Fig. 3 shows a plot illustrating the performance of the method for generating synthetic data in comparison with other methods;
Fig. 4 shows a plot illustrating the performance of the method using Gaussian noise injection for different classification algorithms;
Fig. 5 shows a plot illustrating the performance of the method using Laplacian noise injection for different classification algorithms;
Fig. 6 shows a plot illustrating the performance of the method in comparison with alternative synthetic data generation; and
Fig. 7 shows a graphical representation of a data processing system for carrying out the method.

## Detailed description

Various embodiments of the disclosed method are discussed in detail below. While specific implementations are discussed, it should be understood that this is done for illustration purposes only.

### Tensor networks

Since the method according to the invention makes use of tensor networks, a brief overview of tensor networks and tensors is provided below. Tensor networks or tensor network states represent a class of variational wave functions generally used in the study of many-body quantum systems (cf. Jacob Biamonte, Quantum Tensor Networks in a Nutshell, arXiv: 1708.00006v1).

A tensor is a multi-dimensional array of numbers (e.g., complex numbers, integers or binary values) and may be denoted by the symbol $(T_{\alpha,\beta,\gamma...})_{\alpha \in I1, \beta \in I2, \gamma \in I3, ...}$ (with index sets $I_1$, $I_2$, $I_3$, etc.) or short: $T_{\alpha\beta\gamma...}$. The subscripts $\alpha$, $\beta$, $\gamma$, ... denote different tensor dimensions and the number of these dimensions corresponds to the tensor rank (tensor order) of the tensor.

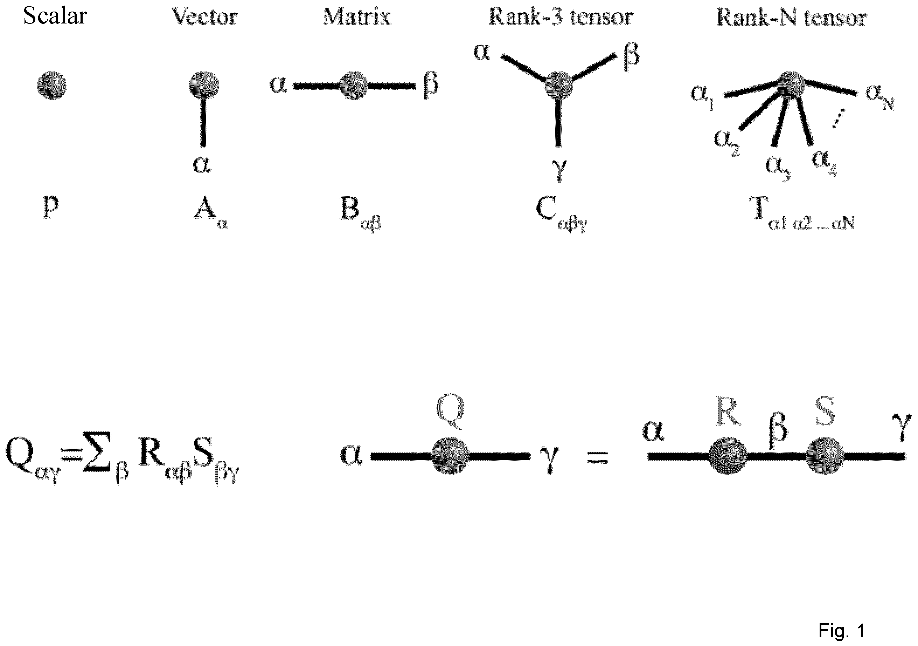

Tensors can represented by tensor diagrams as shown in the upper half of Fig 1. A tensor of rank zero, a scalar, is represented by a single vertex, a vector (rank 1) additionally includes an edge / a *"leg"* corresponding to its single index $\alpha$, a matrix (rank 2) includes two legs corresponding to its two indices $\alpha$ and $\beta$, and so on.

Tensor diagrams may also represent tensor contractions, which include sums of products of scalar components of one tensor or more tensors and may be understood as a generalization of a matrix product and a trace of a matrix, which generally results in a tensor rank reduction. For example, contraction of two rank-2 tensors, i.e., matrices $R_{\alpha\beta}$ and $S_{\beta\gamma}$ along the dimension (index) $\beta$ can be represented diagrammatically by connecting the two tensors, as is shown in the lower half of Fig. 1. The matrices R and S, multiplied with another by summing over index $\beta$ (tracing out index $\beta$: $Q_{\alpha\gamma} = Tr_\beta (R_{\alpha\beta}S_{\beta\gamma}) = \Sigma_\beta R_{\alpha\beta}S_{\beta\gamma}$), share the same leg corresponding to index $\beta$. Both the product of the separate matrices R and S as well as the combined resulting matrix Q has two free indices $\alpha$ and $\gamma$ (degrees of freedom), signified by the two corresponding legs shown in the lower half of Fig. 1.

A tensor network may comprise a plurality of tensors connected with each other by tensor contractions. In this sense, the diagram including R and S shown in Fig. 1 represents a simple example of a tensor network including two tensors R and S.

Tensor networks include, e.g., matrix product states (MPS), matrix product operators (MPO), tree tensor networks, and MERA (multi-scale entanglement renormalization ansatz).

The probabilistic interpretation of quantum mechanics naturally suggests modelling data distribution with a quantum state and quantum physicists and chemists have developed many efficient classical representations of quantum wavefunctions. A number of these developed representations and algorithms can be adopted for efficient probabilistic modeling. In case of using a matrix product state / MPS, an N-dimensional wave function $\Psi$ is parametrized as follows:

$$\Psi(v_1, v_2 \dots v_N) = \mathrm{Tr}\left(A^{(1)v_1} \cdot A^{(2)v_2} \cdot \dots \cdot A^{(N)v_N}\right)$$

Each $A^{(k)vk}$ at (tensor network) site $k$ with *"physical index"* $v_k$ fixed is a $D_{k-1}$ by $D_k$ matrix *("bond dimensions" $D_{k-1}$ and $D_k$)*. The physical index $v_k$ ranges over $d_k$ values: $v_k \in \{0, 1, \dots, d_k - 1\}$ for each $k \in \{1, \dots, N+1\}$. Hence, for each site $k$, the tensor $A^{(k)}$ has an additional dimension to account for the possible values of $v_k$: $D_{k-1} \times D_k \times d_k$. For varying $v_k$, the tensor $A^{(k)}$ corresponds to multiple $D_{k-1}$ by $D_k$ matrices, i.e., a rank-3 tensor. Further, $D_0 = D_N$ is demanded to close the trace. For a Hilbert space of dimension $2^N$, there are $2 \sum_{K=1}^{N} D_{k-1} D_k$ tensor network parameters on the right-hand-side of the equation; for Hilbert space dimension $N^N$, there are $N \sum_{K=1}^{N} D_{k-1} D_k$ parameters.

The representational power of MPS can be expressed using the *von Neumann* entanglement entropy of the quantum state, which in case of a bipartite system *(A, B)* is defined as $S = -\mathrm{Tr}(\rho_A \ln \rho_B)$. Here, the variables are partitioned into two groups $v = (v_A, v_B)$, and $\rho_A = \Sigma_{vB} \psi(v_A, v_B) \psi(v'_A, v_B)$ represents the reduced density matrix of the subsystem *A* (with subsystem B having been traced out). The entanglement entropy sets a lower bound for the bond dimension at the division $S \leq \ln(D_k)$. Any probability distribution of an N-bit system can be described by an MPS as long as its bond dimensions are free from any restriction. The inductive bias using MPS with limited bond dimensions comes from dropping off the minor components of entanglement spectrum. Therefore, as the bond dimension increases, an MPS enhances its ability of parameterizing complicated functions. Long range interactions may be captured using, e.g., tree tensor networks.

*Method for generating synthetic data*

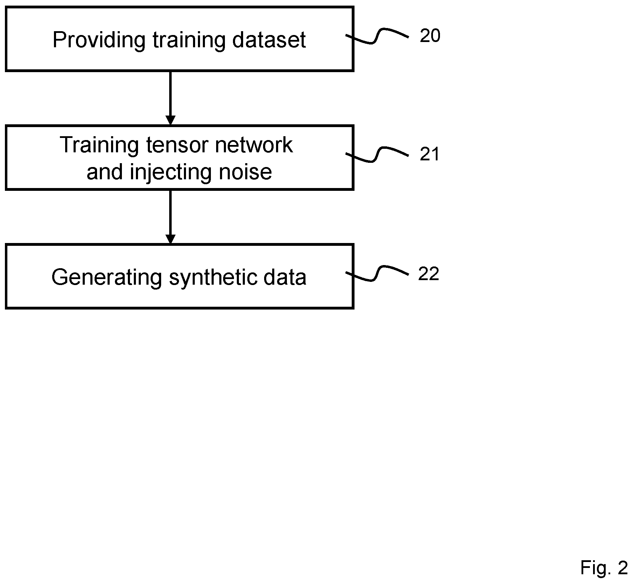

With regard to the method for generating synthetic data according to the invention, Fig. 2 shows an overview flowchart. In a first step 20, to be carried out in the provision module, a tensor network including a plurality of tensors and a training dataset including multiple training data strings is provided. In a second step, 21, to be carried out in the training module, the tensor network is trained with respect to the training dataset by gradient descent. In particular, the following steps are repeated: in the gradient submodule, a tensor network gradient is determined from the tensor network and evaluated using the training dataset; in the noise submodule, noise is applied to the tensor network gradient; and in an updating submodule, the tensor network is correspondingly updated based on the tensor network gradient.

Using the thus trained tensor network, synthetic data are generated (third step 22, to be carried out in the data generation module). The synthetic data include a synthetic data string (sample). Each component to be sampled of the synthetic data string is generated according to a sample probability which is a marginal probability for the component or a conditional probability conditioned on at least one value of a further component of the synthetic data string. At least one of determining the marginal probability and determining the conditional probability comprises separating, for the component, a corresponding partial tensor network from the tensor network and determining a squared norm of the corresponding partial tensor network.

The goal of unsupervised generative modelling is to model the joint probability distribution of given data. With the trained tensor network (model), new samples from the learned probability distribution can be generated.

In the following, exemplary embodiments of the method are described in further detail.

*Training*

The input training dataset 7 comprises multiple training data strings. These may be binary strings $v \in V = \{0,1\}^{\otimes N}$, which are potentially repeated and can be mapped to basis vectors of a Hilbert space of dimension $2^N$. Alternatively, the training data set 7 comprises binary and non-binary (e.g., integer-valued) strings $v \in V = \{0, 1, \dots N\}^{\otimes N}$, which are not repeated and can be mapped to basis vectors of a Hilbert space of dimension $N^N$. The training data set 7 may also comprise non-binary strings only.

In case an MPS representation of the wave function $\Psi(v)$ is used, training can be carried out by adjusting the parameters of the wave function $\Psi(v)$ (here: the tensor network parameters) such that its probability distribution P(v), which is represented by Born's rule, i.e., $P(v) = |\Psi(v)|^2/Z$ (with normalization factor Z) is as close as possible to the data distribution.

For training, maximum likelihood estimation (MLE) can be employed, which defines a (negative) log-likelihood function (NLL) and optimizes it by adjusting the parameters of the model (here: tensor network parameters). In the MPS case, the negative log-likelihood function $\mathcal{L}$ is defined as:

$$\mathcal{L} = -\frac{1}{|T|} \sum_{v \in T} \ln P(v),$$

where ITI denotes the size of the training dataset. Minimizing the NLL reduces the dissimilarity between the model probability distribution P(v) and the empirical distribution defined by the training dataset *T*. Minimizing $\mathcal{L}$ is equivalent to minimizing the Kullback-Leibler divergence between the two distributions.

The MPS (in particular, in a canonical form) may be used to differentiate the NLL with respect to the components of an order-4 tensor $A^{(k,k+1)}$, which is obtained by contracting two adjacent tensors $A^{(k)}$ and $A^{(k+1)}$. The gradient reads:

$$\frac{\partial \mathcal{L}}{\partial A^{(k,k+1)\,w_k w_{k+1}}_{i_{k-1} i_{k+1}}} = \frac{Z'}{Z} - \frac{2}{|T|} \sum_{v \in T} \frac{\Psi'(v)}{\Psi(v)},$$

wherein $\Psi(v) = \Psi(v_1, v_2 \ldots v_N) = \mathrm{Tr}(A^{(1)v1} A^{(2)v2} \ldots A^{(2)vN})$, $\Psi'(v)$ denotes the derivative of the MPS with respect to the tensor element of $A^{(k,k+1)}$ and $Z' = 2 \Sigma_{v \in V} \Psi'(v) \Psi(v)$. For each k, the corresponding tensor $A^{(k,k+1)}$ has dimension $D_{k-1} \times D_k \times d_k \times d_{k+1}$. Although Z and Z' formally involve summations over an exponentially large number of terms, they are tractable in the MPS model via efficient contraction schemes. In particular, if the MPS is in a mixed-canonical form, Z' can be significantly simplified to $2 A^{(k,k+1)\,w_k w_{k+1}}_{i_{k-1} i_{k+1}}$. After gradient descent, the merged order-4 tensor is decomposed into two order-3 tensors, and then the procedure is repeated for each pair of adjacent tensors.

The above procedure may be considered as similar to DMRG (density matrix renormalization group) with a two-site update, which allows to dynamically adjust bond dimensions during optimization and to allocate computational resources to important bonds which represent essential features of the input data. However, the loss function in classic DMRG is usually the energy, while the above procedure makes use of NLL, which is a function of data. Further, when processing a large amount of data, the landscape of the loss function is typically very complicated so that modern optimizers developed in machine learning, such as stochastic gradient descent and learning rate adapting techniques, may be useful in the above procedure. Since the ultimate goal of learning is optimizing the performance on test datasets, there is no need to find the optimal parameters minimizing the loss on the training dataset. One usually stops training before reaching an actual minimum to prevent overfitting.

The above procedure is data-oriented. It is straightforward to parallelize over the samples since the operations applied to them are identical and independent. For example, parallelization may take place over the so-called "batch" dimension. As a concrete example using the full MNIST dataset, the GPU implementation of MPS algorithm is at least 100 times faster than the CPU implementation.

To each tensor network gradient determined as set out above, noise is applied (injected). In the context of differential privacy, noise injection techniques play a crucial role in ensuring the privacy of sensitive data while still allowing for meaningful analysis. Injecting noise within the training process may involve Gaussian noise and Laplacian noise.

Gaussian noise injection comprises adding random noise sampled from a Gaussian distribution to the gradient (for each gradient descent step) or, during a stochastic gradient descent step, the multiple gradients. This noise effectively masks individual data points, making it harder for adversaries to infer sensitive information. Gaussian noise injection is particularly suitable for continuous data or scenarios where the distribution of the data is approximately normal. However, Gaussian noise tends to spread uniformly across all dimensions, which may not be optimal for preserving privacy in certain cases, especially when dealing with high-dimensional data.

On the other hand, Laplacian noise injection involves adding noise sampled from a Laplace distribution to the gradient or gradients. Unlike Gaussian noise, Laplacian noise has heavier tails, which means it can better preserve the sparsity and structure of the data. Laplacian noise injection is well-suited for scenarios where the data is sparse or has outliers, as it provides stronger privacy guarantees while still allowing for accurate model training. Additionally, Laplacian noise injection can be more computationally efficient compared to Gaussian noise, especially in high-dimensional settings.

Choosing between Gaussian and Laplacian noise injection depends on various factors, including the distribution and characteristics of the data, the desired level of privacy, and computational considerations. In practice, a combination of both noise injection techniques may be used to achieve a balance between privacy and utility, leveraging the strengths of each method for different types of data and applications.

For Gaussian noise, the used standard deviation $\sigma$ may be $\sigma = c \cdot q / \epsilon \cdot \sqrt{t \log \frac{1}{\delta}}$. For Laplacian noise, the scaling parameter $\sigma$ may be determined as $\sigma = \Delta f / \varepsilon$. Here, q denotes the sampling ratio per lot, where $q = L/N$. The ratio represents the proportion of data sampled for each step of the algorithm relative to the total dataset size. Further, t represents the number of steps or iterations performed during the training process. $\varepsilon$ and $\delta$ are the differential privacy parameters for achieving $\varepsilon$-differential privacy or $(\varepsilon, \delta)$-differential privacy. In particular, $\varepsilon$ controls the level of privacy protection, while $\delta$ represents the probability of failure in providing privacy. $\Delta f$ and c represent the sensitivity of the model, indicating the maximum amount that the output of a function (e.g., loss or gradient) can change when a single data point is added or removed from the dataset.

*Generative sampling*

Subsequent to training the tensor network, synthetic data samples (synthetic data strings) can be generated independently.

Certain tensor networks such as MPS are useful in that the partition function / normalization factor can be exactly computed with complexity linear in the system size. In case of certain chain-like tensor networks such as MPS, sampling can be carried out bit by bit from one end of the tensor networks to the other.

The sampling process may for example proceed sequentially from the right end of the MPS to the other, generating each variable based on the conditional probability given the determined variables. In detail, a synthetic data string may be sampled as follows. The processing starts at one end of the synthetic data string, for example its last ($N$-th) component (or last bit in the binary case). The $N$-th bit is directly sampled via the marginal probability $P(v_N) = \Sigma_{v1,v2,...VN-1} P(v)$, which can be carried out straightforwardly if all tensors except $A^N$ have, e.g., been gauged to be left-canonical. This is because $P(v_N) = \left| \sum_{i_1,i_2...i_{N-1}} A_{i_1}^{(1)v_1} A_{i_1 i_2}^{(2)v_2} ... A_{i_{N-1}}^{(N)v_N} \right|^2 / Z = |x^{V_N}|^2 / Z$ , wherein $v_k \in \{0,1, ... .d_k\text{-}1\}$, $x_{i_{N-1}}^v =$

$A_{i_{N-1}}^{(N)v_N}$ and normalization factor $Z = \Sigma v_{N \in \{0,1\}} |x^{vn}|^2$. Given the value of the N-th bit, the ($N$-1)-th bit can be sampled. More generally, given the bit values $v_k, v_{k+1}, .. ,v_N$, the ($k$-1)-th bit $v_{k-1}$ is sampled according to the conditional probability

$$P(v_{k-1}|v_k, v_{k+1}, ..., v_N) = \frac{P(v_{k-1}, v_k, ..., v_N)}{P(v_k, v_{k+1}, ..., v_N)}.$$

As a result of the canonical condition, the marginal probability $P(v_k, v_{k+1}, ..., v_N)$ in the denominator can be expressed as:

$$P(v_k, v_{k+1}, .. v_N) = \frac{\left| x^{v_k, v_{k+1}, ..., v_N} \right|^2}{Z},$$

wherein $x_{i_{k-1}}^{v_k, v_{k+1},.. v_N} = \sum_{i_k, i_{k+1}...i_{N-1}} A_{i_{k-1} i_k}^{(k)v_k} A_{i_k i_{k+1}}^{(k+1)v_{k+1}} ... A_{i_{N-1}}^{(N)v_N}$ has been established since the $k$-th bit is sampled. Schematically, the squared norm reads

Multiplying the matrix $A^{(k-1)Vk-1}$ from the left, and calculating the squared norm of the resulting vector,

$x_{i_{k-2}}^{v_{k-1},v_k,.. v_N} = \sum_{i_{k-1}} A_{i_{k-2} i_{k-1}}^{(k-1)v_{k-1}} x_{i_{k-1}}^{v_k,v_{k-1}...v_n}$ , yields the marginal probability

$$P(v_{k-1}, v_k, .. v_N) = \frac{\left| x^{v_{k-1}, v_k, ..., v_N} \right|^2}{Z}$$

in the numerator of the conditional probability. Hence, the conditional probability can be determined as:

$$P(v_{k-1}|v_k, v_{k+1}, \dots, v_N) = \frac{|\boldsymbol{x}^{v_{k-1}, v_k, \dots, v_N}|^2}{|\boldsymbol{x}^{v_k, v_{k+1}, \dots, v_N}|^2}.$$

The sampling may thus include the following steps:

- For the current variable $v_k$, compute the unnormalized probabilities for all possible values $v_k$ = 0,1, .... $d_k$ - 1. The unnormalized probabilities are proportional to the squared norms of the resulting vectors after contracting the MPS tensors up to variable $v_k$. Normalize the unnormalized probabilities to ensure that they sum to 1.

- Determine a cumulative distribution function (CDF) based on the (normalized) probabilities.

- Generate a random number r in the interval [0,1) and select $v_k$ such that r falls within the corresponding interval in the CDF.

- Set the value of $v_k$ and update the vector for the next iteration by contracting with the selected tensor $A^{(k)Vk}$.

- Repeat the above for all the variables from $k = N$ to $k = 1$.

This way, all bit values of the synthetic data string are successively drawn using the conditional probabilities given all the precedingly determined component values. The resulting synthetic data string corresponds to a sample strictly obeying the probability distribution of the MPS.
This sampling approach is not limited to generating samples from scratch in a sequential order. Inference tasks can also be carried out when part of the components are provided or known. In this case, a canonical form may not be necessary or useful, e.g., if there is a segment of unknown components between given/known components. Nevertheless, the marginal probabilities are still tractable because one can also contract ladder-shaped tensor networks efficiently.

*Evaluation*

The underlying dataset employed for evaluation/assessment is derived from the 1996 U.S. Census Bureau data, designated as the Adult Dataset. This dataset encompasses 48 842 entries for six continuous and eight nominal attributes. Notably, approximately 7 % of the entries contain missing values across various features. The following attributes are included in the Adult Dataset: Age: Continuous, from 17 to 90; Workclass: Categorical (8 categories); Fnlwgt (final weight): Continuous from 12285 to 1490400; Education: Categorical (16 categories); Education-num: Continuous from 1 to 16; Marital-status: Categorical (7 categories); Occupation: Categorical (14 categories); Relationship: Categorical (6 categories); Race: Categorical (5 categories); Sex: Categorical (2 categories); Capital-gain: Continuous from 0 to 99999; Capital-loss: Continuous from 0 to 4356; Hours-per-week: Continuous from 1 to 99; Native-country: Categorical (41 categories); Class: Categorical (2 categories).
For assessing the synthetic data generated according to the proposed method, quality metrics and fidelity metrics may be employed. Fidelity metrics assess how well the synthetic data captures mathematical properties of the real data, while quality metrics gauge how well machine learning models perform on the real data when trained on the synthetic data.
Fidelity, in other words accuracy, precision or realism, is one goal for synthetic data. For evaluating the synthetic data, the python library Synthetic Data Metrics (SDMetrics) is used. Various metrics are employed to measure the fidelity of the synthetic data, some of which focus on categorical data columns and others focus on continuous data columns.
For categorical features, the following metrics can be used. Category coverage measures the extent to which all possible categories or classes in a dataset are represented in the synthetic dataset. For instance, in a dataset with categorical variables like colors (e.g., red, green, blue), category coverage may assess whether the synthetic data include examples of all these colors. High category coverage may ensure that the synthetic data are comprehensive and representative of all categorical variations in the original data.
Further, total variation quantifies the degree of variation (or change) between adjacent data points. In the context of synthetic data, it can be measured how much variation exists in the synthetic data compared to the original (training) dataset, so that the synthetic data captures the inherent variability of the original data.
A chi-squared test can be applied to assess whether the distribution of categorical variables in the synthetic data matches that of the original dataset. This way, the replication of frequencies and relationships of categories may be tracked. Moreover, with contingency similarity, the similarity in a joint distribution of two or more categorical variables between the original dataset and the synthetic data may be evaluated, generally comprising analyzing contingency tables (cross-tabulations) that show the frequency distribution of variables. A high contingency similarity indicates that the synthetic data accurately preserves the relationships and interactions among multiple variables.

For continuous features, the following metrics may be used. Boundary adherence refers to how well the synthetic data respect minimum and maximum values observed in the original dataset. This way, it may be tracked that logical or actual bounds of the data are not exceeded, such as age being between 0 and a plausible maximum such as 120.

Further, range coverage measures the extent to which the synthetic data spans the entire range of values found in the original dataset. Thus, the synthetic data may be ensured to capture the entire spectrum of data from the lowest to the highest value, including all intermediate variations. Moreover, the Kolmogorov-Smirnov test is a non-parametric test used to compare two distributions and determine if they are significantly different. In synthetic data generation, the KS test can assess how closely the distribution of the synthetic data matches that of the original data.

In addition to fidelity metrics, the quality of synthetic data may be further evaluated by training various classification machine learning models on this data and assessing their performance using a test set derived from real data. This process enables a comparative analysis of model performance between those trained on synthetic data versus those trained on real data.

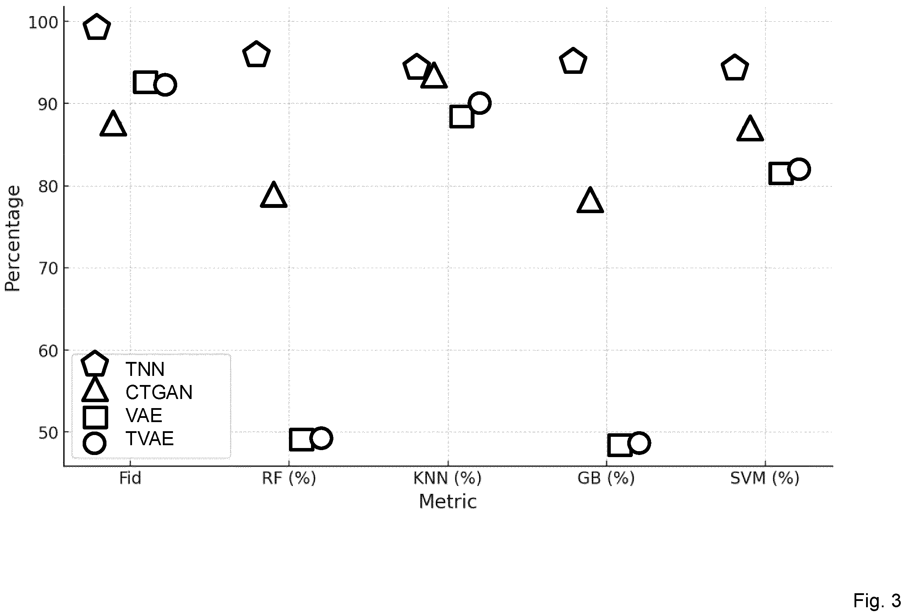

For the plots according to Figs. 3 to 6 discussed below, the binary income feature is predicted, utilizing the F1 score as the primary evaluation metric. In case of an imbalanced dataset, where performance metrics like accuracy can be misleading, the F1 score may also be employed as a quality metric. The F1 score is defined as

$$F1 = \frac{2 \cdot (\text{Precision} \cdot \text{Recall})}{\text{Precision} + \text{Recall}},$$

with $\text{Precision} = \frac{TP}{TP+FP}$ , $\text{Recall} = \frac{TP}{TP+FN}$ , true positive TP, false positive FP, and false negative FN.

Different classification algorithms are employed for evaluating the synthetic data, including Random Forest (RF - cf., e.g., Gilles Louppe, arXiv:1407.7502v3), k-nearest neighbors (KNN - cf. Pádraig Cunningham et al., ar-Xiv:2004.04523v2), Gradient Boosting (GB - cf. Hung-Hsuan Chen, arXiv:2410.05623v2), and support vector machines (SVM - cf. Fabrice Rossi et al., arXiv:0705.0209v1). For evaluation, the original dataset may be partitioned into (first) training subsets (the training dataset), validation subsets, and test subsets, preferably with proportions of 60%, 20%, and 20%, respectively. Concurrently, the synthetic data may be divided into second training and validation sets in an 80-20% split. The classifiers are first trained using the training and validation sets and subsequently evaluated on the test set derived from the real data. The outcomes from this evaluation serve as a benchmark for assessing the classifiers trained on synthetic data. Following the benchmarking, the same four classifiers are trained using the second training and validation sets. Their performance is then tested using the real data (first) test set. This allows for a direct comparison of performance metrics between models trained on synthetic versus real data, providing insights into the efficacy of the synthetic data in replicating real-world data scenarios and maintaining model accuracy.

Fig. 3 shows a plot illustrating the performance of the method for generating synthetic data in comparison with other methods. In this example, an MPS tensor network (TNN) has been employed. Further synthetic data have been generated using CTGAN (conditional tabular generative adversarial networks), VAE (variational autoencoder), and TVAE (tabular VAE).

The different columns of the figure correspond to the employed classification algorithms, namely Random Forest (RF), k-nearest neighbors (KNN), Gradient Boosting (GB), and support vector machines (SVM). For reference, no noise has been injected in this case. To determine the fidelity values ("Fid"), nine different metrics were employed, namely Boundary Adherence, Range Coverage, Category Coverage, Kolmogorov-Smirnov statistic, Total Variation Distance, Contingency Similarity, Pearson Correlation, Chi2 Test, and Cramer's. The values range from 0 to 1, comparing the synthetic data with the real data. The fidelity in [%] corresponds to the overall score of the metrics (real data have 1). The metrics are used to measure statistical characteristics of the data form, e.g., dispersion.

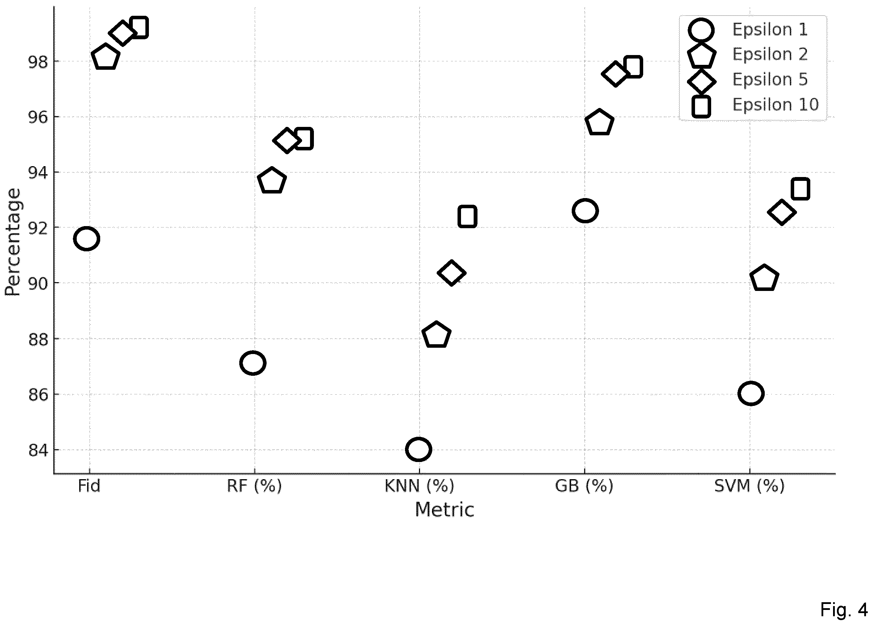

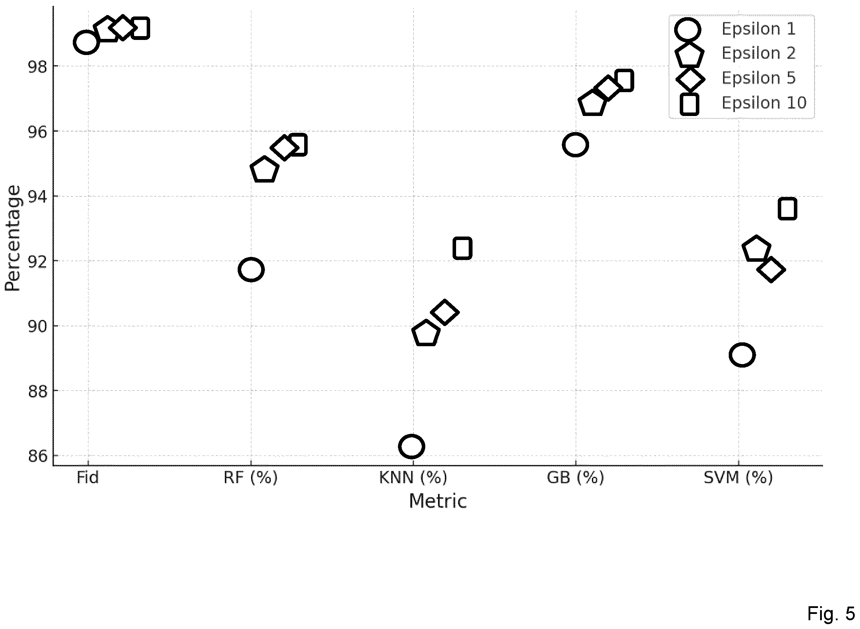

Fig. 4 shows a plot illustrating the performance of the method using Gaussian noise injection for different classification algorithms. Different levels of privacy protection are represented by different sizes 1, 2, 5, and 10 for the differential privacy parameter $\varepsilon$. Higher values for $\varepsilon$ correspond to lower noise injection. Hence, better performance with higher values for $\varepsilon$ is expected. Fig. 5 shows a corresponding plot for Laplacian noise injection.

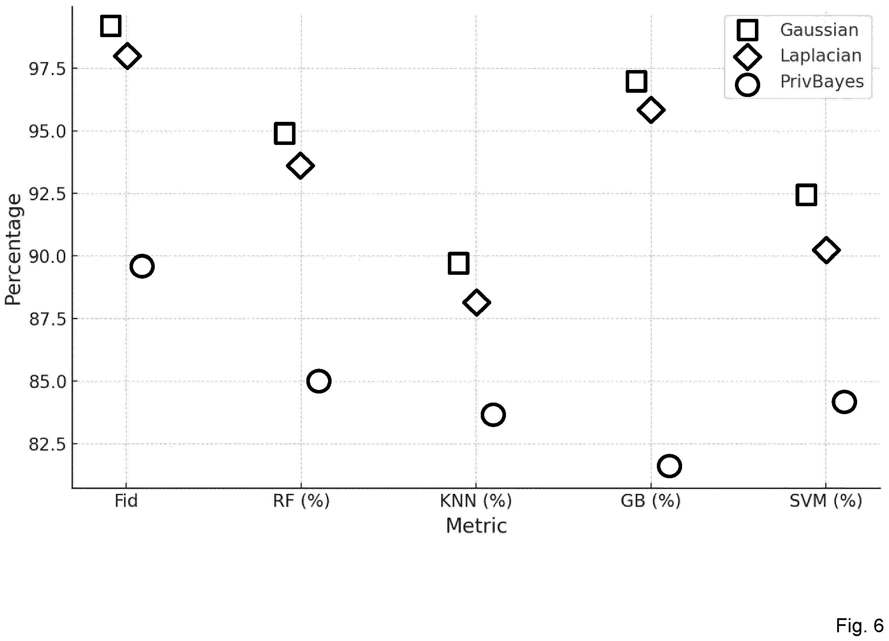

In Fig. 6, the method for generating synthetic data including noise injection (Gaussian and Laplacian noise) is compared with synthetic data generation using *PrivBayes* (Private Data Release via Bayesian Networks). The differential privacy parameter $\varepsilon$ has been fixed to 20 for each case.

*Hardware setup*

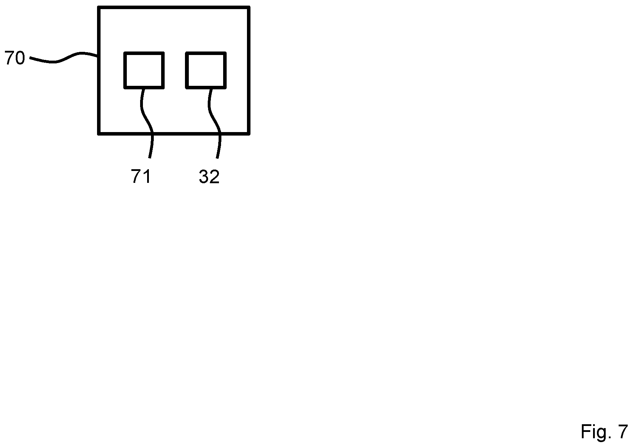

Fig. 7 shows a data processing system comprising means for carrying out the method. The data processing system may comprise a data processing device 70 (computer) or a plurality of data processing devices (not shown). The data processing device 70 has processor 71 and a storage medium 72 (computer-readable medium). The processor may be, for example, a central processing unit (CPU), a graphics processing unit (GPU), a field programmable gate array (FPGA) and/or an application specific integrated circuit (ASIC), or may comprise one or more of these elements. The storage medium 72 may comprise a non-volatile memory and/or a volatile memory. The storage medium 72 may include instructions that may be executed by the processor 71 to provide the functionality described herein. The data processing system and/or the data processing device 70 is adapted to execute method for generating synthetic data according to one of the embodiments described herein. In one example, a computer program is stored on the storage medium 72 for this purpose.

The features disclosed in this description, the drawings, and/or the claims may be material for the realization of various embodiments, taken in isolation or in various combinations thereof.

Reference signs

| | |
|---|---|
| 20, 21, 22 | method steps |
| 70 | data processing device |
| 71 | processor |
| 72 | storage medium |

**Claims**

1. A computer-implemented method for generating synthetic data, comprising:

   - providing a tensor network including a plurality of tensors and a training dataset including at least one training data string;
   - training the tensor network with respect to the training dataset by gradient descent, comprising the following steps:

     - determining a tensor network gradient from the tensor network, the tensor network gradient being evaluated using the training dataset;
     - applying noise to the tensor network gradient; and
     - adjusting the tensor network based on the tensor network gradient;

   - generating, from the tensor network, synthetic data including a synthetic data string, wherein:

     - each component to be sampled of the synthetic data string is generated according to a sample probability which is a marginal probability for the component or a conditional probability conditioned on at least one value of a further component of the synthetic data string and
     - at least one of determining the marginal probability and determining the conditional probability comprises separating, for the component, a corresponding partial tensor network from the tensor network and determining a squared norm of the corresponding partial tensor network.

2. The method according to claim 1, wherein the tensor network is a matrix product state tensor network, a tensor train, a matrix product operator tensor network, a tree tensor network, or a multi-scale entanglement renormalization ansatz tensor network.

3. The method according to claim 1 or 2, wherein the training data set comprise a binary-valued training data string and/or an integer-valued training data string.

4. The method according to any of the preceding claims, further comprising preprocessing the training data set, including at least one of:

   - discretizing a continuous training data string to a discretized training data string,
   - mapping the discretized training data string to a binary-valued or an integer-valued training data string, and
   - mapping a categorical training data string to a binary-valued or an integer-valued training data string.

5. The method according to any of the preceding claims, wherein the at least one training data string is indicative of at least one of physiological data, medical data, ethnicity, social data, personal movement data, and address data.

6. The method according to any of the preceding claims, wherein the tensor network gradient is determined from a negative log-likelihood function of a norm of the tensor network.

7. The method according to any of the preceding claims, wherein the tensor network is trained by stochastic gradient descent, preferably comprising:

   - determining mini-batch gradients from the tensor network, the mini-batch gradients being evaluated using multiple samples from the training dataset, and determining the tensor network gradient as an average of the mini-batch gradients.

8. The method according to any of the preceding claims, wherein applying noise to the tensor network gradient comprises entrywise adding random noise to the tensor network gradient.

9. The method according to claim 8, wherein the random noise includes at least one of Gaussian noise and Laplacian noise.

10. The method according to claim 8 or 9, wherein a noise parameter of the random noise is determined from a differential privacy parameter.

11. The method according to any of the preceding claims, wherein the training of the tensor network further comprises constraining a tensor network gradient norm below a predefined threshold.

12. The method according to any of the preceding claims, wherein the synthetic data string comprises at least one predetermined component.

13. A data processing system comprising means for carrying out the method according to any of the preceding claims.

14. A computer program product comprising instructions which, when the program is executed by a computer, cause the computer to carry out the method according to any of claims 1 to 12.

15. A computer-readable medium comprising instructions which, when executed by a computer, cause the computer to carry out the method according to any of claims 1 to 12.

| Scalar | Vector | Matrix | Rank-3 tensor | Rank-N tensor |
|--------|--------|--------|---------------|---------------|

$$p \qquad A_\alpha \qquad B_{\alpha\beta} \qquad C_{\alpha\beta\gamma} \qquad T_{\alpha 1\, \alpha 2\, \dots\, \alpha N}$$

$$Q_{\alpha\gamma} = \sum_\beta R_{\alpha\beta} S_{\beta\gamma}$$

EP 4 760 591 A1

Fig. 1

Fig. 2

Fig. 3

Fig. 4

Fig. 5

EP 4 760 591 A1

Fig. 6

70 71 32

Fig. 7

EP 4 760 591 A1

| | Europäisches Patentamt / European Patent Office / Office européen des brevets | **EUROPEAN SEARCH REPORT** | **Application Number**<br>EP 24 38 3349 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAO-YU HAN ET AL: "Unsupervised Generative Modeling Using Matrix Product States", ARXIV.ORG, CORNELL UNIVERSITY LIBRARY, 201 OLIN LIBRARY CORNELL UNIVERSITY ITHACA, NY 14853, 6 September 2017 (2017-09-06), XP081105458, DOI: 10.1103/PHYSREVX.8.031012 * abstract * * sections II-IV, Appendix A-B * ----- | 1-15 | INV.<br>G06N3/042<br>G06N3/047<br>G06N3/0475<br>G06N3/088<br><br>ADD.<br>G06N10/60 |
| A | NIE XIN ET AL: "Differentially Private Tensor Train Decomposition in Edge-Cloud Computing for SDN-Based Internet of Things", IEEE INTERNET OF THINGS JOURNAL, IEEE, USA, vol. 7, no. 7, 16 December 2019 (2019-12-16), pages 5695-5705, XP011798216, DOI: 10.1109/JIOT.2019.2960293 [retrieved on 2020-07-09] * the whole document * ----- | 1-15 | |
| A | ALEX MOSSI ET AL: "A Matrix Product State Model for Simultaneous Classification and Generation", ARXIV.ORG, CORNELL UNIVERSITY LIBRARY, 201 OLIN LIBRARY CORNELL UNIVERSITY ITHACA, NY 14853, 25 June 2024 (2024-06-25), XP091800327, * the whole document * ----- -/-- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 19 May 2025 | Cilia, Elisa |

page 1 of 2

Europäisches
Patentamt

European
Patent Office

Office européen
des brevets

**EUROPEAN SEARCH REPORT**

Application Number

EP 24 38 3349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALEJANDRO POZAS-KERSTJENS ET AL: "Privacy-preserving machine learning with tensor networks", ARXIV.ORG, CORNELL UNIVERSITY LIBRARY, 201 OLIN LIBRARY CORNELL UNIVERSITY ITHACA, NY 14853, 14 July 2023 (2023-07-14), XP091563091, * the whole document * ----- | 1-15 | |
| A | SONG CHENG ET AL: "Tree Tensor Networks for Generative Modeling", ARXIV.ORG, CORNELL UNIVERSITY LIBRARY, 201 OLIN LIBRARY CORNELL UNIVERSITY ITHACA, NY 14853, 8 January 2019 (2019-01-08), XP081012425, * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 19 May 2025 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LU et al.** *Journal of LaTeX files*, 2021, vol. 14 (8)
- **A. JUNG**. Machine Learning: The Basics. Springer, 2022
- **ABADI et al.** *Deep Learning with Differential Privacy, 23rd ACM Conference on Computer and Communications Security*, 2016
- **PÁDRAIG CUNNINGHAM et al.** *arXiv:2004.04523v2*
- **HUNG-HSUAN CHEN**. *arXiv:2410.05623v2*
- **FABRICE ROSSI et al.** *arXiv:0705.0209v1*